(19) Europäisches Patentamt / European Patent Office / Office européen des brevets

(11) **EP 4 253 083 B1**

(12) **EUROPEAN PATENT SPECIFICATION**

(45) Date of publication and mention
of the grant of the patent:
**27.08.2025   Bulletin 2025/35**

(21) Application number: **21898041.5**

(22) Date of filing: **25.11.2021**

(51) International Patent Classification (IPC):
**B60C 7/00** *(2006.01)*      **B60B 25/04** *(2006.01)*
**B60B 25/14** *(2006.01)*     **B60C 7/14** *(2006.01)*
**B60C 7/24** *(2006.01)*

(52) Cooperative Patent Classification (CPC):
**B60C 7/146; B60B 25/04; B60B 25/12;
B60B 25/14; B60C 7/143; B60C 7/24;**
B60B 2360/30

(86) International application number:
**PCT/JP2021/043231**

(87) International publication number:
**WO 2022/114069 (02.06.2022 Gazette 2022/22)**

(54) **NON-PNEUMATIC TIRE AND TIRE ASSEMBLY**

LUFTLOSER REIFEN UND REIFENANORDNUNG

PNEU SANS AIR ET ENSEMBLE PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.11.2020   JP 2020196763**

(43) Date of publication of application:
**04.10.2023   Bulletin 2023/40**

(73) Proprietor: **BRIDGESTONE CORPORATION**
**Chuo-ku**
**Tokyo 104-8340 (JP)**

(72) Inventor: **ABE, Akihiko**
**Tokyo 104-8340 (JP)**

(74) Representative: **Marks & Clerk LLP**
**15 Fetter Lane**
**London EC4A 1BW (GB)**

(56) References cited:
JP-A- 2004 284 538      JP-A- 2008 195 366
JP-A- 2012 236 555      JP-A- 2017 100 588
JP-A- 2017 100 589      JP-A- 2017 165 159
JP-A- H0 796 708        JP-A- H07 507 253
US-A- 4 226 273         US-A1- 2016 243 890
US-A1- 2018 304 688     US-A1- 2019 152 256

**Description**

[Technical Field]

The present invention relates to a non-pneumatic tire and a tire assembly. Priority is claimed on Japanese Patent Application No. 2020-196763, filed on November 27, 2020.

[Background Art]

In the related art, a tire assembly is known in which a non-pneumatic tire having an inner cylinder, an outer cylinder, and a connecting member is mounted on an outer peripheral surface of a rim.
As a tire assembly of this type, a configuration as disclosed in Patent Document 1 below, for example, is known. In this configuration, a fitting structure including a key groove and a key is provided between the outer peripheral surface of the rim and an inner peripheral surface of the inner cylinder to restrict a relative rotation of the rim and the non-pneumatic tire in a tire circumferential direction.

[Citation List]

[Patent Document]

[Patent Document 1]
Japanese Patent No. 5879089
[Patent Document 2]
US 2018/304688 A1 which discloses a non-pneumatic tire that includes a circumferential tread having a first axial width. The tire further includes a lower annular band having a circumferential convex curved surface and a second axial width greater than the first axial width. The lower annular band is configured to deflect upon application of an axial force above a threshold axial force. The tire also includes tire structure connecting the circumferential tread to the lower annular band. The tire structure has a third axial width less than the second axial width.
[Patent Document 3]
JP 2017 165159 A which discloses a non-pneumatic tire 1 that comprises: an attachment body attached to an axle; a ring member having an inner cylindrical body which is provided on the attachment body and an outer cylindrical body surrounding the inner cylindrical body from the outside in a tire radial direction; and a plurality of connection members that are arranged along a tire circumferential direction between the inner cylindrical body and the outer cylindrical body, and which connect both cylindrical bodies to each other so as to be freely displaced. An outer circumferential surface of the attachment body and an inner circumferential surface of the inner cylindrical body are formed each having the same noncircular shape as viewed from a tire width direction, and the attachment body is fitted to the inside of the inner cylindrical body. The center of gravity of the attachment body and the center of gravity of the whole of the plurality of connection members and the ring member are each positioned at the same position.

[Summary of Invention]

[Technical Problem]

However, in the non-pneumatic tire of the related art, there is a problem that it is difficult to reduce the cost and to make an anti-rotation mechanism that restricts the relative rotation of the rim and the non-pneumatic tire in the tire circumferential direction less likely to be damaged.
The present invention has been made in view of the circumstances described above, and an object thereof is to provide a non-pneumatic tire and a tire assembly capable of making it difficult to damage the anti-rotation mechanism for restricting the relative rotation of the rim and the non-pneumatic tire in the tire circumferential direction.

[Solution to Problem]

In order to solve the above problems, the present invention proposes a tire assembly as defined in claim 1.

[Advantageous Effects of Invention]

According to this invention, it is possible to reduce a cost, and it is possible to make an anti-rotation mechanism that restricts a relative rotation of a rim and a non-pneumatic tire in a tire circumferential direction less likely to be damaged.

[Brief Description of Drawings]

FIG. 1 is a side view of a tire assembly according to one embodiment.
FIG. 2 is a sectional view taken along line **II-II** of FIG. 1.

[Description of Embodiments]

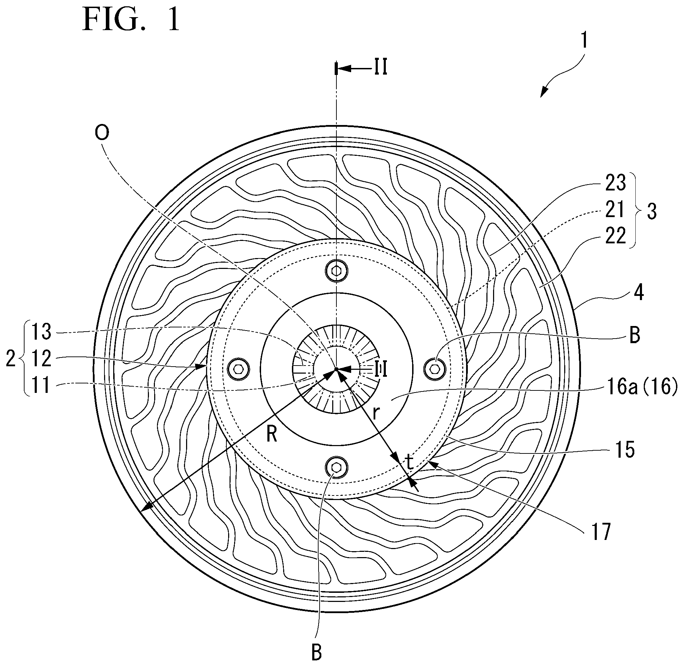

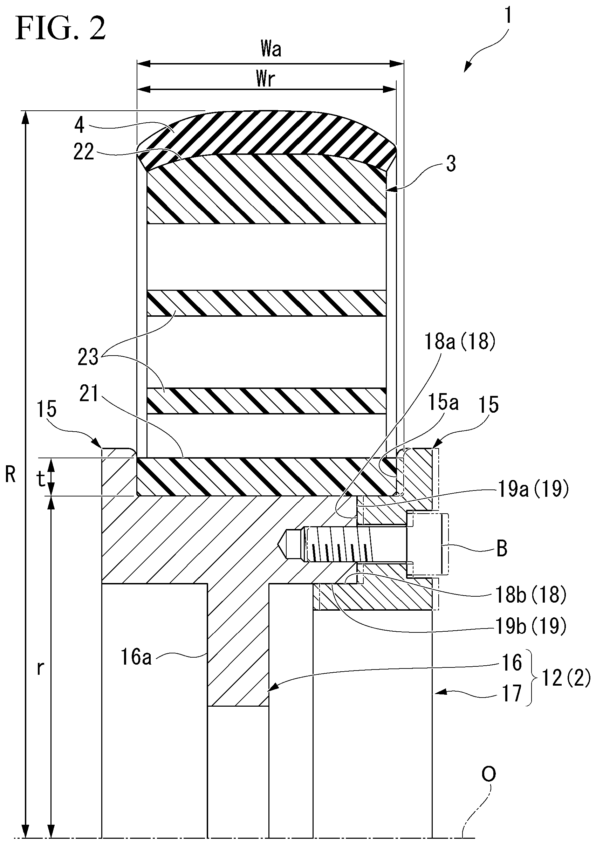

A tire assembly 1 according to the present embodiment will be described below with reference to FIGS. 1 and 2. The tire assembly 1 includes a wheel 2 having a rim 12, a non-pneumatic tire 3, and a tread member 4. The tire assembly 1 is used by being attached to, for example, bicycles, wheelchairs, two-wheeled vehicles, automobiles, and the like.
The rim 12, the non-pneumatic tire 3, and the tread member 4 are each formed in an annular shape, and their central axes are located on a common axis. Hereinafter, this common axis will be referred to as a central axis O, and a direction along the central axis O will be referred to as a tire width direction. Moreover, when viewed from the tire width direction, a direction of rotation around the central axis O is referred to as a tire circumferential direction, and a direction intersecting with the central axis O is referred to as a tire radial direction.
Center portions of the wheel 2, the non-pneumatic tire 3, and the tread member 4 in the tire width direction are aligned with each other.
The wheel 2 includes a hub 11 attached to an axle, the rim 12 surrounding the hub 11 from an outside in the tire radial direction, and a plurality of spokes 13 connecting an outer peripheral surface of the hub 11 and an inner peripheral surface of the rim 12 to each other. The hub 11, the rim 12, and the spokes 13 are made of a metal material such as aluminum alloy.
The hub 11 is formed in a cylindrical shape and arranged coaxially with the central axis O. The spokes 13 connect the outer peripheral surface of the hub 11 and the inner peripheral surface of the rim 12 to each other. The plurality of spokes 13 are provided over the entire tire circumferential direction between the outer peripheral surface of the hub 11 and the inner peripheral surface of the rim 12.
The rim 12 is formed in an annular shape continuously extending over the entire length in the tire circumferential direction. The rim 12 is arranged coaxially with the central axis O. The outer peripheral surface of the rim 12 extends straight in the tire width direction in a vertical cross-sectional view along both the tire width direction and the tire radial direction. A pair of holding flange portions 15 which protrudes toward the outside in the tire radial direction and extends continuously over the entire length in the tire circumferential direction is formed on the outer peripheral surface of the rim 12. The holding flange portions 15 are provided at both end portions of the outer peripheral surface of the rim 12 in the tire width direction.
The rim 12 is divided in the tire width direction and includes a first split body 16 and a second split body 17 each having a holding flange portion 15. The first split body 16 and the second split body 17 are made of the same material.
In the illustrated example, a size of the first split body 16 in the tire width direction is greater than a size of the second split body 17 in the tire width direction. The sizes in the tire width direction of the first split body 16 and the second split body 17 may be the same. An inner peripheral surface of the second split body 17 is located inside an inner peripheral surface of the first split body 16 in the radial direction. The inner peripheral surfaces of the first split body 16 and the second split body 17 may be continuous in the tire width direction without steps. Each of the first split body 16 and the second split body 17 has the holding flange portion 15, the inner peripheral surface of the rim 12, and the outer peripheral surface of the rim 12. A configuration in which at least one of the inner peripheral surface of the rim 12 and the outer peripheral surface of the rim 12 is not provided as the first split body 16 and the second split body 17 may be adopted. A flange portion 16a which protrudes inward in the tire radial direction and extends over the entire length in the tire circumferential direction is formed on the inner peripheral surface of the first split body 16.
In one of the first split body 16 and the second split body 17, a centering protrusion portion 19 which protrudes toward the other in the tire width direction and is fitted into a centering recessed portion 18 formed in the other is formed. That is, in one of the first split body 16 and the second split body 17, the centering protrusion portion 19 which protrudes toward the other in the tire width direction and is fitted into a centering recessed portion 18 formed in the other is formed.
In the illustrated example, the centering protrusion portion 19 is formed over the entire length in both the tire radial direction and the tire circumferential direction at an end portion of the first split body 16 on a side of the second split body 17 along the tire width direction. That is, the centering protrusion portion 19 is the entire end portion of the first split body 16 on the second split body 17 side along the tire width direction.

Note that the centering protrusion portion 19 may be formed at a part in the tire radial direction or a part in the tire circumferential direction at the end portion of the first split body 16 on the side of the second split body 17 along the tire width direction.

The centering recessed portion 18 is formed over the entire area of an end surface of the second split body 17 facing the side of the first split body 16 along the tire width direction, excluding an inner peripheral edge portion.

Note that the centering recessed portion 18 may be formed over the entire area of the end surface of the second split body 17 facing the side of the first split body 16 along the tire width direction, excluding the outer peripheral edge portion, or may be formed in an intermediate portion in the tire radial direction.

An end surface 19a of the centering protrusion portion 19 of the first split body 16 facing the side of the second split body 17 along the tire width direction is in contact with a bottom surface 18a, of an inner surface defining the centering recessed portion 18 of the second split body 17, which faces the side of the first split body 16 along the tire width direction.

In the inner surface that defines the centering recessed portion 18, a surface 18b that faces outward in the tire radial direction extends inward in the tire radial direction toward the side of the first split body 16 in the tire width direction. In the surface of the centering protrusion portion 19, a surface 19b that faces inward in the tire radial direction extends outward in the tire radial direction toward the side of the second split body 17 in the tire width direction. The surface 18b of the centering recessed portion 18 and the surface 19b of the centering protrusion portion 19 may extend straight in the tire width direction.

A counterbored hole that penetrates in the tire width direction and opens to the bottom surface 18a of the centering recessed portion 18 is formed in the second split body 17. The centering protrusion portion 19 of the first split body 16 is formed with a female threaded portion that communicates with the counterbored hole. The first split body 16 and the second split body 17 are fixed to each other in the tire width direction by inserting a bolt B into the counterbored hole and fastening the bolt B to the female threaded portion. A plurality of counterbored holes, female threaded portions, and bolts B are provided at equal intervals in the tire circumferential direction.

When the tire assembly 1 is mounted on the vehicle such that the second split body 17 is positioned on the outside of the vehicle and the first split body 16 is positioned on the inside of the vehicle, the non-pneumatic tire 3 can be easily assembled to the rim 12 mounted on the vehicle.

The tire assembly 1 may be mounted on the vehicle such that the second split body 17 is positioned the inside of the vehicle and the first split body 16 is positioned on the outside of the vehicle.

The non-pneumatic tire 3 is fixed to a rim 12. The non-pneumatic tire 3 includes an inner cylinder 21 surrounding the outer peripheral surface of the rim 12 from the outside in the tire radial direction, an outer cylinder 22 surrounding the inner cylinder 21 from the outside in the tire radial direction, and a plurality of elastically deformable connecting members 23 that connect an outer peripheral surface of the inner cylinder 21 and an inner peripheral surface of the outer cylinder 22 to each other. A Young's modulus of a material forming the non-pneumatic tire 3 is, for example, 30 MPa or more and 1500 MPa or less.

The inner cylinder 21 and the outer cylinder 22 are arranged coaxially with the central axis O. The inner cylinder 21, the outer cylinder 22, and the connecting member 23 are provided in a state in which their center portions in the tire width direction are aligned with each other.

Inner surfaces 15a of the pair of holding flange portions 15, which face each other in the tire width direction, are in contact with each other over the entire area of the opening edges at both ends of the inner cylinder 21 in the tire width direction. The inner cylinder 21 is compressed and deformed in the tire width direction within an elastic region.

The plurality of connecting members 23 are provided between the outer peripheral surface of the inner cylinder 21 and the inner peripheral surface of the outer cylinder 22 at intervals in the tire circumferential direction. The plurality of connecting members 23 are provided at equal intervals in the tire circumferential direction. As shown in FIG. 1, the plurality of connecting members 23 extend obliquely in the same direction with respect to the tire radial direction when viewed from the tire width direction. The connecting member 23 is formed in a plate shape, and is provided in such a posture that front and back surfaces face the tire circumferential direction or the tire radial direction and side surfaces face the tire width direction.

The inner cylinder 21, the outer cylinder 22, and the connecting member 23 are integrally formed of thermoplastic resin. The thermoplastic resin may be, for example, a single resin, a mixture containing two or more resins, or a mixture containing one or more resins and one or more elastomers. Furthermore, the thermoplastic resin may contain additives such as anti-aging agents, plasticizers, fillers, or pigments.

In addition, the inner cylinder 21, the outer cylinder 22, and the connecting member 23 may be formed separately. The inner cylinder 21, the outer cylinder 22, and the connecting member 23 may be made of a synthetic resin material other than thermoplastic resin.

The tread member 4 is elastically deformable and provided on the outer peripheral surface of the outer cylinder 22 of the non-pneumatic tire 3. The Young's modulus of the material forming the tread member 4 is smaller than the Young's modulus of the material forming the non-pneumatic tire 3. As shown in FIG. 2, the outer peripheral surface of the tread member 4 presents a curvilinear shape protruding toward the outside in the tire radial direction in a vertical cross-sectional view along both the tire width direction and the tire radial direction.

The tread member 4 is made of, for example, vulcanized rubber obtained by vulcanizing natural rubber or/and a rubber composition, or a thermoplastic material. From the viewpoint of wear resistance, it is preferable to form the tread member 4 from vulcanized rubber. Examples of thermoplastic materials include thermoplastic elastomers and thermoplastic resins.

Examples of thermoplastic elastomers include amide-based thermoplastic elastomers (TPA), ester-based thermoplastic elastomers (TPC), olefin-based thermoplastic elastomers (TPO), styrene-based thermoplastic elastomers (TPS), urethane-based thermoplastic elastomers (TPU), cross-linked thermoplastic rubbers (TPV) specified in JIS K6418, other thermoplastic elastomers (TPZ), and the like.

Examples of thermoplastic resins include urethane resins, olefin resins, vinyl chloride resins, polyamide resins, and the like.

The non-pneumatic tire 3 before being fixed to the rim 12 will be described below.

As indicated by two-dot chain lines in FIG. 2, a size Wa of the inner cylinder 21 in the tire width direction is greater than a distance Wr between the inner surfaces 15a of the pair of holding flange portions 15 facing each other in the tire width direction, and the inner cylinder 21 is formed to be elastically deformable in the tire width direction. Both end portions of the inner cylinder 21 in the tire width direction protrude from the connecting member 23 in the tire width direction.

The inner cylinder 21 is held between the pair of holding flange portions 15 in the tire width direction, and is compressed and deformed in the tire width direction within the elastic region. Therefore, the inner cylinder 21 is fixed to the rim 12 in a state where the size of the inner cylinder 21 in the tire width direction becomes equal to the distance Wr between the inner surfaces 15a of the pair of holding flange portions 15. That is, in the tire assembly 1, an amount of compressive deformation of the inner cylinder 21 in the tire width direction is a difference between the size Wa of the inner cylinder 21 in the tire width direction and the distance Wr between the inner surfaces 15a of the pair of holding flange portions 15. In this case, the end surface 19a of the centering protrusion portion 19 and the bottom surface 18a of the centering recessed portion 18 are in contact with each other, and the first split body 16 and the second split body 17 abut against each other in the tire width direction.

Here, when the Young's modulus of the material forming the rim 12 is referred to as Er, the Young's modulus of the material forming the inner cylinder 21 is referred to as E, a radius of an outer peripheral surface of the tread member 4 is referred to as R, a radius of the outer peripheral surface of the rim 12 is referred to as r, a plate thickness of the inner cylinder 21 is referred to as t, a pressing force from a road surface applied to the non-pneumatic tire 3 is referred to as Fz, a static friction coefficient between the road surface and the tread member 4 is referred to as $\mu$, and a static friction coefficient between the inner cylinder 21 and the holding flange portion 15 is referred to as $\mu$r, the following equations (1) and (2) are satisfied.

[Expression 1]

$$W_r \leq W_a \cdot \left( 1 - \frac{\mu \cdot F_z \cdot R}{2\pi \cdot r^2 \cdot \mu_r \cdot t \cdot E} \right) \quad \cdots \quad (1)$$

$$E_r > 10E \quad \cdots \quad (2)$$

As a result, in a frictional force generated between the road surface and the tread member 4, a frictional force which prevents the rim 12 and the non-pneumatic tire 3 from rotating relative to each other in the tire circumferential direction is generated between the holding flange portion 15 and the inner cylinder 21. That is, a torque Tr caused by the frictional force generated between the holding flange portion 15 and the inner cylinder 21 becomes equal to or greater than a torque T caused by the frictional force generated between the road surface and the tread member 4.

Here, the torque T caused by the frictional force generated between the road surface and the tread member 4 is calculated from an equation (3), and the torque Tr caused by the frictional force generated between the holding flange portion 15 and the inner cylinder 21 is calculated from an equation (4). P included in the equation (4) represents a stress required to compressively deform the inner cylinder 21 by (Wa-Wr) in the tire width direction, as shown in an equation (5).

[Expression 2]

$$T = \mu \cdot F_z \cdot R \quad \cdots \quad (3)$$

$$T_r = \int_0^{2\pi} \left( r \cdot \mu_r \cdot P \cdot t \cdot r \right) d\theta = 2\pi \cdot r^2 \cdot \mu_r \cdot t \cdot P \quad \cdots \quad (4)$$

$$P = E \cdot \frac{W_a - W_r}{W_a} \quad \cdots \quad (5)$$

Next, a method for manufacturing the tire assembly 1 configured as described above will be described.

First, the bolt B is removed from the rim 12 to separate the first split body 16 and the second split body 17 from each other, and the holding flange portions 15 of the first split body 16 and the second split body 17 are separated from each other.

Next, while the inner cylinder 21 is brought into contact with the inner surface 15a of the holding flange portion 15 of the first split body 16 in the tire width direction, the centering protrusion portion 19 of the first split body 16 is fitted into the centering recessed portion 18 of the second split body 17, and in a state where the second split body 17 is temporarily fixed to the first split body 16, the bolt B is inserted into the counterbored hole of the second split body 17 and fastened to the female threaded portion of the first split body 16. As a result, the inner cylinder 21 is pushed toward the side of the first split body 16 along the tire width direction by the inner surface 15a of the holding flange portion 15 of the second split body 17, and is compressed and deformed in the tire width direction within the elastic region.

In this case, the end surface 19a of the centering protrusion portion 19 and the bottom surface 18a of the centering recessed portion 18 are brought into contact with each other, and the first split body 16 and the second split body 17 abut against each other in the tire width direction to be integrally assembled. At the same time, the non-pneumatic tire 3 is assembled to the rim 12, and the tire assembly 1 is obtained.

As described above, according to the non-pneumatic tire 3 and the tire assembly 1 of the present embodiment, the size Wa of the inner cylinder 21 in the tire width direction is greater than the distance Wr between the inner surfaces 15a of the pair of holding flange portions 15 facing each other in the tire width direction, and the inner cylinder 21 is formed to be elastically deformable in the tire width direction. Accordingly, when the non-pneumatic tire 3 is assembled to the rim 12, the inner cylinder 21 can be held in the tire width direction by the pair of holding flange portions 15 and compressed and deformed within the elastic region until the size Wa of the inner cylinder 21 in the tire width direction becomes equal to the distance Wr between the inner surfaces 15a of the pair of holding flange portions 15. Therefore, a large frictional force can be generated between the holding flange portion 15 and the inner cylinder 21.

As a result, in the frictional force generated between the road surface and the tread member 4, the frictional force which prevents the rim 12 and the non-pneumatic tire 3 from rotating relative to each other in the tire circumferential direction can be easily generated between the holding flange portion 15 and the inner cylinder 21. Therefore, as an anti-rotation mechanism for restricting the relative rotation of the rim 12 and the non-pneumatic tire 3 in the tire circumferential direction, there is no need to provide a fitting structure including a key groove and a key between the outer peripheral surface of the rim 12 and the inner peripheral surface of the inner cylinder 21. Therefore, for example, cost reduction can be achieved, and the anti-rotation mechanism can be made less likely to be damaged.

Since the above equations (1) and (2) are satisfied, in the frictional force generated between the road surface and the tread member 4, the frictional force which prevents the rim 12 and the non-pneumatic tire 3 from rotating relative to each other in the tire circumferential direction can be reliably generated between the holding flange portion 15 and the inner cylinder 21.

In one of the first split body 16 and the second split body 17, the centering protrusion portion 19 which protrudes toward the other in the tire width direction and is fitted into the centering recessed portion 18 formed in the other of the first split body 16 and the second split body 17 is formed. Accordingly, when the non-pneumatic tire 3 is assembled to the rim 12, by fitting the centering protrusion portion 19 into the centering recessed portion 18, the first split body 16 and the second split body 17, which are separated from each other, can be integrally assembled easily and accurately.

The non-pneumatic tire of the present invention includes an inner cylinder that surrounds an outer peripheral surface of a metal rim from an outside in a tire radial direction, an outer cylinder that surrounds the inner cylinder from the outside in the tire radial direction, and a plurality of elastically deformable connecting members that connect an outer peripheral surface of the inner cylinder and an inner peripheral surface of the outer cylinder to each other. The inner cylinder is made of a synthetic resin material. A pair of holding flange portions that protrudes toward the outside in the tire radial direction, extends continuously over an entire length in the tire circumferential direction, and holds the inner cylinder in a tire width direction to fix the inner cylinder to the rim is formed on the outer peripheral surface of the rim. The rim includes a first split body and a second split body that are divided in the tire width direction and each have the holding flange portion. A size of the inner cylinder in the tire width direction is greater than a distance between inner surfaces, which face each other in the tire width direction, of the pair of holding flange portions. The inner cylinder is formed to be elastically deformable in the tire width direction.

A tire assembly according to the present invention includes a rim and the non-pneumatic tire of the present invention fixed to the rim. The inner cylinder is compressed and deformed in the tire width direction. The size of the inner cylinder in the tire width direction is same as the distance between the inner surfaces of the pair of holding flange portions.

In this invention, the size of the inner cylinder in the tire width direction is greater than the distance between the inner surfaces of the pair of holding flange portions that face each other in the tire width direction, and the inner cylinder is formed to be elastically deformable in the tire width direction. As a result, when the non-pneumatic tire is assembled to the rim, the inner cylinder can be held in the tire width direction by the pair of holding flange portions and compressed and deformed within the elastic region until the size of the inner cylinder in the tire width direction becomes equal to the distance between the inner surfaces of the pair of holding flange portions. Therefore, a large frictional force can be generated between the holding flange portion and the inner cylinder. Accordingly, in the frictional force generated between the road surface and the tread member, the frictional force which prevents the rim and the non-pneumatic tire from rotating relative to each other in the tire circumferential direction can be easily generated between the holding flange portion and the inner cylinder. Therefore, as an anti-rotation mechanism for restricting the relative rotation of the rim and the non-pneumatic tire in the tire circumferential direction, there is no need to provide a fitting structure including a key groove and a key between the outer peripheral surface of the rim and the inner peripheral surface of the inner cylinder. Therefore, for example, cost reduction can be achieved, and the anti-rotation mechanism can be made less likely to be damaged.

Here, in order to assemble the non-pneumatic tire to the rim, first, the first split body and the second split body of the rim are separated. Moreover, in a state where one of the pair of holding flange portions is separated from the other holding flange portion, while the inner cylinder is brought into contact with the inner surface of one holding flange portion in the tire width direction, the inner cylinder is pushed in the tire width direction toward the one holding flange portion by the inner surface of the other holding flange portion in the elastic region and compressed and deformed, and the first split body and the second split body abut against each other in the tire width direction and assembled integrally.

A tread member is provided on an outer peripheral surface of the outer cylinder, and when the size of the inner cylinder in the tire width direction is referred to as Wa, the distance between the inner surfaces, which face each other in the tire width direction, of the pair of holding flange portions is referred to as Wr, a Young's modulus of a material forming the rim is referred to as Er, a Young's modulus of a material forming the inner cylinder is referred to as E, a radius of an outer peripheral surface of the tread member is referred to as R, a radius of the outer peripheral surface of the rim is referred to as r, a plate thickness of the inner cylinder is referred to as t, a pressing force from a road surface applied to the non-pneumatic tire is referred to as Fz, a static friction coefficient between the road surface and the tread member is referred to as $\mu$, and a static friction coefficient between the inner cylinder and the holding flange portion is referred to as $\mu r$, the following equations (1) and (2) may be satisfied.

[Expression 3]

$$W_r \leq W_a \cdot \left( 1 - \frac{\mu \cdot F_z \cdot R}{2\pi \cdot r^2 \cdot \mu_r \cdot t \cdot E} \right) \quad \cdots (1)$$

$$E_r > 10E \quad \cdots (2)$$

In this case, the above equations (1) and (2) are satisfied. As a result, in the frictional force generated between the road surface and the tread member, the frictional force which prevents the rim and the non-pneumatic tire from rotating relative to each other in the tire circumferential direction can be reliably generated between the holding flange portion and the inner cylinder.

In one of the first split body and the second split body, a centering protrusion portion which protrudes toward the other in the tire width direction and is fitted into a centering recessed portion formed in the other of the first split body and the second split body is formed.

In this case, in one of the first split body and the second split body, a centering protrusion portion which protrudes toward the other in the tire width direction and is fitted into the centering recessed portion formed in the other is formed. As a result, when the non-pneumatic tire is assembled to the rim, by fitting the centering protrusion portion into the centering recessed portion, the first split body and the second split body which are separated from each other can be integrally assembled easily and accurately.

A technical scope of the present invention is not limited to the above-described embodiments, and various modifications can be made without departing from a gist of the present invention.

For example, the centering recessed portion 18 and the centering protrusion portion 19 may not be formed in the first split body 16 and the second split body 17.

[Industrial Applicability]

According to this invention, it is possible to reduce a cost, and it is possible to make an anti-rotation mechanism that restricts a relative rotation of a rim and a non-pneumatic tire in a tire circumferential direction less likely to be damaged.

[Reference Signs List]

1: Tire assembly
2: Wheel
3: Non-pneumatic tire
4: Tread member
12: Rim
15: Holding flange portion
15a: Inner surface
16: First split body
17: Second split body
21: Inner cylinder
22: Outer cylinder
23: Connecting member

**Claims**

1. A tire assembly (1) comprising:

   a metal rim (12); and
   a non-pneumatic tire (3) fixed to the metal rim (12),
   wherein, the non-pneumatic tire (3) comprises:

   an inner cylinder (21) that surrounds an outer peripheral surface of the metal rim (12) from an outside in a tire radial direction;
   an outer cylinder (22) that surrounds the inner cylinder (21) from the outside in the tire radial direction; and
   a plurality of elastically deformable connecting members (23) that connect an outer peripheral surface of the inner cylinder (21) and an inner peripheral surface of the outer cylinder (22) to each other,
   wherein the inner cylinder (21) is made of a synthetic resin material,
   the metal rim (12) comprises a pair of holding flange portions (15) that protrudes toward the outside in the tire radial direction, extends continuously over an entire length in the tire circumferential direction, and holds the inner cylinder (21) in a tire width direction to fix the inner cylinder (21) to the metal rim (12), and is formed on the outer peripheral surface of the metal rim (12),
   the metal rim (12) includes a first split body (16) and a second split body (17) that are divided in the tire width direction and each have the holding flange portion (15),
   wherein, a size of the inner cylinder (21) in the tire width direction in a state, in which the non-pneumatic tire (3) is not mounted on the metal rim (12), is greater than a distance between inner surfaces (15a), which face each other in the tire width direction, of the pair of holding flange portions (15) in a state, in which the non-pneumatic tire (3) is mounted on the metal rim (12), and

the inner cylinder (21) is formed to be elastically deformable in the tire width direction, and

wherein, in a mounted state of the non-pneumatic tire (3) on the metal rim (12) the inner cylinder (21) is compressed and deformed in the tire width direction, and

in the mounted state, the size of the inner cylinder (21) in the tire width direction is the same as the distance between the inner surfaces (15a, 15b) of the pair of holding flange portions (15),

**characterized in that**

the metal rim (12) is split in only two split bodies,

\wherein, a size of the first split body (16) in the tire width direction is greater than a size of the second split body (17) in the tire width direction,

wherein, in one of the first split body (16) and the second split body (17), a centering protrusion portion (19) is formed that protrudes toward the other of the first split body (16) and the second split body (17) in the tire width direction, and

the centering protrusion portion (19) is fitted into a centering recessed portion (18) formed on the other of the first split body (16) and the second split body (17).

**Patentansprüche**

1. Reifenbaugruppe (1), die Folgendes umfasst:

    eine Metallfelge (12) und
    einen luftlosen Reifen (3), der an der Metallfelge (12) befestigt ist,
    wobei der luftlose Reifen (3) Folgendes umfasst:

    einen inneren Zylinder (21), der eine äußere Umfangsfläche der Metallfelge (12) von einer in einer Reifenradialrichtung äußeren Seite umgibt,
    einen äußeren Zylinder (22), der den inneren Zylinder (21) von der in der Reifenradialrichtung äußeren Seite umgibt, und
    eine Vielzahl von elastisch verformbaren Verbindungselementen (23), die eine äußere Umfangsfläche des inneren Zylinders (21) und eine innere Umfangsfläche des äußeren Zylinders (22) miteinander verbinden,
    wobei der innere Zylinder (21) aus einem Kunstharzmaterial besteht,
    die Metallfelge (12) ein Paar von Halteflanschabschnitten (15) umfasst, das zu der in der Reifenradialrichtung äußeren Seite hin vorspringt, sich durchgehend über eine gesamte Länge in der Reifenumfangsrichtung erstreckt und den inneren Zylinder (21) in einer Reifenbreitenrichtung hält, um den inneren Zylinder (21) an der Metallfelge (12) zu befestigen, und auf der äußeren Umfangsfläche der Metallfelge (12) geformt ist,
    die Metallfelge (12) einen ersten geteilten Körper (16) und einem zweiten geteilten Körper (17) einschließt, die in der Reifenbreitenrichtung unterteilt sind und jeweils den Halteflanschabschnitt (15) aufweisen,
    wobei eine Größe des inneren Zylinders (21) in der Reifenbreitenrichtung in einem Zustand, in dem der luftlose Reifen (3) nicht auf der Metallfelge (12) montiert ist, größer ist als eine Entfernung zwischen Innenflächen (15a), die einander in der Reifenbreitenrichtung gegenüberliegen, des Paares von Halteflanschabschnitten (15) in einem Zustand, in dem der luftlose Reifen (3) auf der Metallfelge (12) montiert ist, und der innere Zylinder (21) so geformt ist, dass er in der Reifenbreitenrichtung elastisch verformbar ist, und
    wobei, in einem montierten Zustand des luftlosen Reifens (3) auf der Metallfelge (12), der innere Zylinder (21) in der Reifenbreitenrichtung zusammengedrückt und verformt ist, und
    in dem montierten Zustand, die Größe des inneren Zylinders (21) in der Reifenbreitenrichtung dieselbe ist wie die Entfernung zwischen den Innenflächen (15a, 15b) des Paares von Halteflanschabschnitten (15),
    **dadurch gekennzeichnet, dass**
    die Metallfelge (12) in nur zwei geteilte Körper geteilt ist,
    wobei eine Größe des ersten geteilten Körpers (16) in der Reifenbreitenrichtung größer ist als eine Größe des zweiten geteilten Körpers (17) in der Reifenbreitenrichtung,
    wobei, in einem von dem ersten geteilten Körper (16) und dem zweiten geteilten Körper (17), ein Zentrierungsvorsprungsabschnitt (19) geformt ist, der zu dem anderen von dem ersten geteilten Körper (16) und dem zweiten geteilten Körper (17) hin in der Reifenbreitenrichtung vorspringt, und
    der Zentrierungsvorsprungsabschnitt (19) in einen Zentrierungsaussparungsabschnitt (18) eingepasst ist, der an dem anderen von dem ersten geteilten Körper (16) und dem zweiten geteilten Körper (17) geformt ist.

## Revendications

1. Ensemble de pneumatique (1), comprenant :

une jante métallique (12) ; et
un pneumatique sans air (3) fixé sur la jante métallique (12) ;
dans lequel le pneumatique sans ans air (3) comprend :

un cylindre intérieur (21) qui entoure une surface périphérique externe de la jante métallique (12) à partir d'un extérieur, dans une direction radiale du pneumatique ;
un cylindre extérieur (22) qui entoure le cylindre intérieur (21) à partir de l'extérieur, dans la direction radiale du pneumatique ; et
une pluralité d'éléments de connexion à déformation élastique (23) qui connectent une surface périphérique externe du cylindre intérieur (21) et une surface périphérique interne du cylindre extérieur (22) l'une à l'autre ;
dans lequel le cylindre intérieur (21) est composé d'un matériau de résine synthétique ;
la jante métallique (12) comprend une paire de parties de bride de retenue (15) qui fait saillie vers l'extérieur, dans la direction radiale du pneumatique, s'étend en continu sur une longueur entière, dans la direction circonférentielle du pneumatique, et retient le cylindre intérieur (21), dans une direction de la largeur du pneumatique, pour fixer le cylindre intérieur (21) sur la jante métallique (12), et est formée sur la surface périphérique externe de la jante métallique (12) ;
la jante métallique (12) inclut un premier corps divisé (16) et un deuxième corps divisé (17) qui sont répartis dans la direction de la largeur du pneumatique et comportent chacun la partie de bride de retenue (15) ;
dans lequel une taille du cylindre intérieur (21), dans la direction de la largeur du pneumatique, dans un état dans lequel le pneumatique sans air (3) n'est pas monté sur la jante métallique (12), est supérieure à une distance entre des surfaces internes (15a) qui se font face l'une l'autre, dans la direction de la largeur du pneumatique, de la paire de parties de bride de retenue (15), dans un état dans lequel le pneumatique sans air (3) est monté sur la jante métallique (12) ; et
le cylindre intérieur (21) est formé de sorte à pouvoir être déformé de manière élastique dans la direction de la largeur du pneumatique ; et
dans lequel, dans un état monté du pneumatique sans air (3) sur la jante métallique (12), le cylindre intérieur (21) est comprimé et déformé dans la direction de la largeur du pneumatique ; et
dans **l'état** monté, la taille du cylindre intérieur (21), dans la direction de la largeur du pneumatique, est identique à la distance entre les surfaces internes (15a, 15b) de la paire de parties de bride de retenue (15) ;
**caractérisé en ce que** :

la jante métallique (12) est divisée uniquement en deux corps divisés ;
dans lequel une taille du premier corps divisé (16), dans la direction de la largeur du pneumatique, est supérieure à une taille du deuxième corps divisé (17) dans la direction de la largeur du pneumatique ;
dans lequel, dans l'un du premier corps divisé (16) et du deuxième corps divisé (17), une partie de centrage en saillie (19) est formée, qui fait saillie vers l'autre du premier corps divisé (16) et du deuxième corps divisé (17), dans la direction de la largeur du pneumatique ; et
la partie de centrage en saillie (19) est ajustée dans une partie de centrage en retrait (18) formée sur l'autre du premier corps divisé (16) et du deuxième corps divisé (17).

FIG. 1

FIG. 2

**EP 4 253 083 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020196763 A
- JP 5879089 B
- US 2018304688 A1
- JP 2017165159 A